# EUROPEAN PATENT APPLICATION

(11) **EP 3 812 941 A1**
(43) Date of publication of application: **28.04.2021**
(21) Application number: 20203459.1
(22) Date of filing: 22.10.2020
(51) Int. Cl.: G06F 21/60, H04L 29/08

(54) **PROCESSING COMPUTER FILES**

(30) Priority: 22.10.2019 GB 201915241; 26.06.2020 US 202016913338
(71) Applicant: Metaswitch Networks Ltd, Enfield, Middlesex EN2 6BQ (GB)
(72) Inventor: ARCHER, Duncan, Enfield, Middlesex EN2 6BQ (GB); JACKSON, Daniel Ian, Enfield, Middlesex EN2 6BQ (GB); RUSSELL, Matthew John, Enfield, Middlesex EN2 6BQ (GB)
(74) Representative: CMS Cameron McKenna Nabarro Olswang LLP

(57) **Abstract**

A computer file is processed at a first network entity (NE) (105). At least part of the file is received (S2c) from a second NE (110). Data relating to the received at least part of the file is transmitted (S2e) to a third NE (115) and: (i) comprises a file name of the file, the file name being transmitted to the third NE before the first NE received at least one other part of the file; and/or (ii) indicates that the first NE is processing the at least part of the file; and/or (iii) indicates that the first NE is in the process of receiving the file. Confirmation data is received (S2f) from the third NE, confirming that the third NE has received the transmitted data. A file transfer acknowledgment is transmitted (S2h) to the second NE on the conditions that the first NE (i) has successfully received the file and (ii) has received the confirmation data.

## Description

### Technical Field

The present disclosure relates to processing computer files.

### Background

A computer file can be transferred from a sending (or "sender") network entity to a receiving (or "recipient") network entity in a computer network. The receiving network entity sends a file transfer acknowledgment, indicating receipt of the computer file, to the sending network entity once the receiving network entity has received the computer file. On receiving the file transfer acknowledgment, the sending network entity can promptly delete the computer file, for example to free up data storage resources at the sending network entity.

### Summary

According to first embodiments, there is provided a method of processing a computer file at a first network entity in a computer network, the method comprising:
receiving at least part of the computer file from a second network entity;
transmitting data relating to the received at least part of the computer file to a third network entity;
receiving confirmation data from the third network entity, the received confirmation data confirming that the third network entity has received the transmitted data; and
transmitting a file transfer acknowledgment to the second network entity on the conditions that the first network entity (i) has successfully received the computer file and (ii) has received the confirmation data.

According to second embodiments, there is provided a method of processing a computer file in a computer network, the method comprising:
receiving the computer file; and
delaying acknowledging receipt of the computer file until at least part of the computer file has been stored redundantly in the computer network.

According to third embodiments, there is provided a method of processing a computer file in a computer network, the method comprising:
receiving, at an application layer, the computer file; and
delaying, at the application layer, transmitting a file transfer acknowledgment associated with successful receipt of the computer file until at least part of the computer file has been stored in multiple storage locations in the computer network.

According to fourth embodiments, there is provided a method of processing a computer file in a computer network, the method comprising, at a network entity in the computer network:
receiving data relating to at least part of the computer file, the at least part of the computer file having been received by at least one other network entity in the computer network;
transmitting confirmation data to the at least one other network entity to enable the at least one other network entity to transmit a file transfer acknowledgment message indicating that the computer file has been successfully received, the transmitted confirmation data confirming that the network entity has received the data relating to the at least part of the computer file; and
using the received data relating to the at least part of the computer file to recover the computer file in the event of failure of the at least one other network entity.

According to fifth embodiments, there is provided a network entity configured to perform a method according to any of the first through fourth embodiments.

According to sixth embodiments, there is provided a computer program adapted to perform a method according to any of the first through fourth embodiments.

Further features and advantages will become apparent from the following description, given by way of example only, which is made with reference to the accompanying drawings.

### Brief Description of the Drawings

Figure 1 shows a block diagram of an example of a computer network in accordance with embodiments; and
Figure 2 shows a sequence diagram depicting an example of a method of processing a computer file in accordance with embodiments.

### Detailed Description

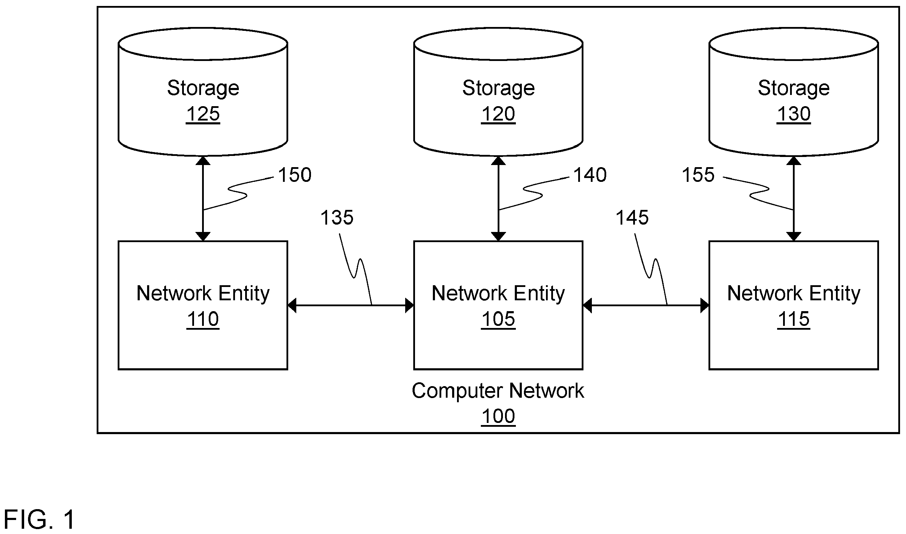

Referring to Figure 1, there is shown schematically an example of a computer network 100. The entities depicted in Figure 1 may be embodied as one or more physical resources, or as one or more virtualised resources instantiated on one or more physical resources. The entities may comprise one or more processors and one or more memories. One or more computer programs comprising computer-readable instructions may be stored in the one or more memories. The one or more processors may be configured to execute the computer-readable instructions and perform at least some of the methods and techniques described herein as a result. While the entities depicted in Figure 1 are shown separately, the separation is, in some cases, logical rather than physical. For example, functionality of multiple ones of the entities could be combined. One or more of the entities may be cloud-based (also known as "virtualised"). Multiples ones of the entities depicted in Figure 1 may be provided by a single physical hardware resource, for example by a single server, or may be provided by multiple physical hardware resources, for example by a pool of servers. Where multiple physical hardware resources are used, they may be located in one or more geographical locations.

In this example, the computer network 100 comprises three network entities, namely first, second and third network entities 105, 110, 115, associated with first, second and third storage 120, 125, 130 respectively. The computer network 100 could comprise more than three network entities in other examples. Although the first, second and third storage 120, 125, 130 are depicted as separate entities in Figure 1, the separation is logical. For example, the first, second and third storage 120, 125, 130 may correspond to first, second and third partitions of a given physical disk. However, some or all of the first, second and third storage 120, 125, 130 may be on different physical disks. In some examples, data is replicated across some or all of the first, second and third storage 120, 125, 130. Data may be stored redundantly in the computer network 100 in this way. In this example, (i) the first network entity 105 is communicatively coupled to the second network entity 110 via coupling 135, to the first storage 120 via coupling 140 and to the third network entity 115 via coupling 145, (ii) the second network entity 110 is communicatively coupled to the second storage 125 via coupling 150 and (iii) the third network entity 115 is communicatively coupled to the third storage 130 via coupling 155.

Computer files are transferred in the computer network 100. A computer file is a computer resource for recording data. Transfer of a computer file may correspond to transfer of a stream of data, where the computer file transfer begins and finishes at the start and end of the stream respectively. A computer file may store textual data, video data, graphical data, a computer program, etc. Computer files may be organised in a file system. A computer file is logically different from other types of data communicated in computer networks such as, but not limited to, packets, frames and segments. Computer files may, for example, be associated with an application layer, which is an abstraction layer. The application layer is used in both the Internet Protocol Suite (or "TCP/IP") model and the Open Systems Interconnection (OSI) model of computer networks. Processing at the application layer differs from processing at lower abstraction layers. Computer files may be transferred at an application layer, whereas packets, frames and segments may be transmitted at lower layers, for example in a network layer. Computer files may be transferred in accordance with a file transfer protocol, examples of which include, but are not limited to, File Transfer Protocol (FTP), Secure File Transfer Protocol (SFTP), File Transfer Protocol Secure (FTPS), and/or Secure Copy Protocol (SCP).

Loss of computer files may result in performance degradation in the computer network 100. In this example, the second network entity 110 transfers computer files to the first network entity 105. The second network entity 110 might assume that ownership of a computer file has passed from the second network entity 110 to the first network entity 105 once the computer file has been transferred to the first network entity 105. The second network entity 110 may take one or more predetermined actions in response to determining that the transfer taken place. Examples of such predetermined actions include, but are not limited to, (i) deleting the transferred computer file or (ii) marking the transferred computer file for deletion. However, certain activity, for example at the first network entity 105, may result in at least some data loss in relation to the transferred computer file. Such activity may occur shortly after the first network entity 105 receives the computer file. Failure of the first network entity 105 may result in partial or full data loss in relation to the transferred computer file, for example. This can occur if, for example, the first network entity 105 stores the transferred computer file in multiple locations in the computer network 100, for example redundantly, with such storage taking a non-zero amount of time after transfer of the computer file to the first network entity 105.

By way of a specific example, the first and third network entities 105, 115 may comprise first and second Charging Collection Functions (CCFs) respectively and the second network entity 110 may comprise a Charging Trigger Function (CTF). The second network entity 110 may, for example, be a Telephony Application Server (TAS) comprising a CTF that transfers network resource usage report files (or "billing files") to the first CCF 105. Such transfer may be over SFTP. The TAS 110 may mark a network resource usage report file for deletion on transfer of the network resource usage report file to the first CCF 105. However, the CCF 105 may take a non-zero (or at least non-trivial) amount of time to store the transferred network resource usage report in multiple places, for example redundantly in a clustered data store comprising the first and third storage 120, 130. Such storage might not be successful and the TAS 110 might delete the transferred network resource usage report file and/or mark it for deletion even though the first CCF 105 had not safely stored it. Examples described herein enable the (potential) data loss window between (i) the computer file being transferred to the first network entity 105 and (ii) the second network entity 110 taking the one or more predetermined actions to be closed, or at least reduced.

In some examples, the first network entity 105 receives a computer file. Instead of the first network entity 105 acknowledging transfer of the computer file immediately upon receipt of the computer file, the first network entity 105 intentionally, and artificially, delays sending a file transfer acknowledgment until at least part of the received computer file has been stored in multiple locations, for example redundantly, in the computer network 100. The expression "at least part of the received computer file" is used herein to mean some or all of the received computer file and is used interchangeably with the expression "partial or entire computer file". The artificial delay applied by the first network entity 105 occurs between the first network entity 105 receiving the computer file and the occurrence of another predetermined event. As will be explained below, in some instances the computer file is received before the occurrence of the other predetermined event and in other examples the computer file is received after the occurrence of the other predetermined event. The other predetermined event could, for example, be a predetermined part of the computer file being stored successfully (for example, by the third network entity 115), all of the computer file being stored successfully (for example, by the third network entity 115), or otherwise. As such, in some examples, instead of acknowledging transfer of the computer file immediately upon successful receipt of the computer file by a single network entity, namely the first network entity 105, the first network entity 105 waits until some or all of the computer file has been transferred to at least one other entity in the network 100. In this way, the second network entity 110 can safely assume that a file transfer acknowledgment indicating a complete file transfer means that the transferred computer file has been received and, in some examples, safely stored by the first network entity 105. The amount of the delay is optimised in some examples such that the second network entity 110 could delete the computer file, or at least mark the computer file for deletion, as soon as the computer file is safely transferred. This may allow the second network entity 110 to free up resources, such as storage resources, as soon as the computer file can be removed safely from storage at the second network entity 110.

Examples described herein refer to computer files being transferred or received "successfully" and to computer files being transferred or received "safely". These terms are used for different purposes herein.

In particular, the term "successful" transfer or receipt is used herein to mean receipt of an entire computer file such that a recipient of the computer file could send a file transfer acknowledgment, and optionally the sender of the computer file could delete the computer file and/or mark it for deletion. Successful receipt may be dependent on the computer file passing an integrity and/or verification check and/or may depend on one or more further factors.

In contrast, the term "safe" transfer or receipt is used herein to mean not only successful receipt, but also at least one further condition being met. The further condition may correspond to some or all of the computer file having been stored in multiple locations in the computer network 100, to at least one network entity other than the first network entity 105 being aware that the first network entity 105 is receiving, has received and/or is processing the computer file, etc.

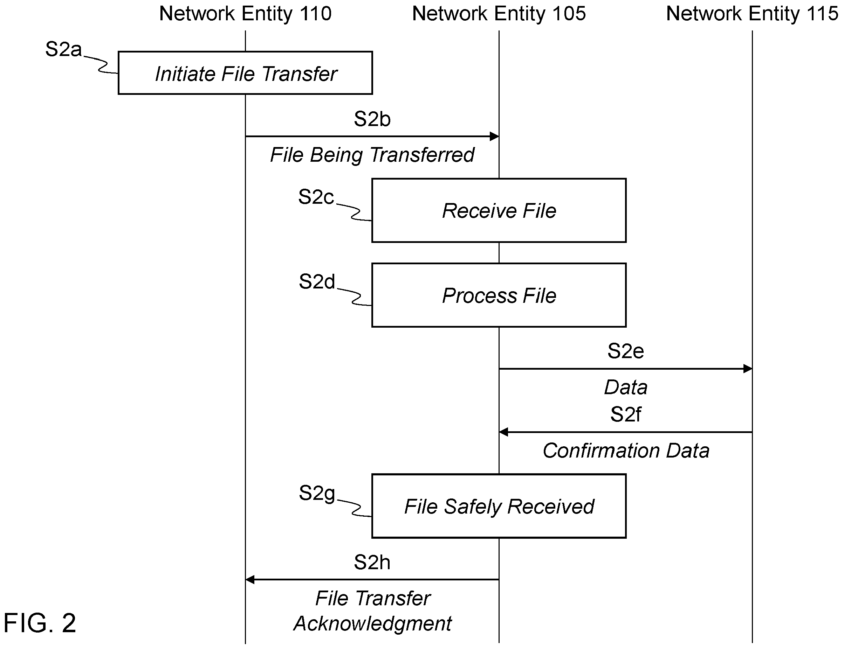

Referring to Figure 2, there is shown an example of a method of processing a computer file. In this example, the method is performed at an application layer.

In this example, at item S2a, the second network entity 110 initiates transfer of a computer file to the first network entity 105. At item S2b, the computer file is being transferred from the second network entity 110 to the first network entity 105 via the coupling 135. At item S2c, in this example, the first network entity 105 has received the entire computer file. In other examples, the first network entity 105 may only have received part of the computer file at this stage. In particular, the first network entity 105 may receive a meaningful portion of the computer file a significant amount of time before the entire computer file is received and the transfer of the entire computer file is complete.

In another example (not shown), at item S2a, the second network entity 110 initiates transfer of a computer file to the first network entity 105. At item S2b, the first network entity 105 transmits data related to the computer file, but not all or part of the computer file itself. An example of such data related to the computer file is a notification that the computer file is about to transferred. Such a notification may include information pertaining to the computer file.

At item S2d, the first network entity 105 processes the computer file. Processing the computer file could comprise transforming the computer file from one format to another. Processing the computer file could comprise performing an integrity check (for example, a checksum test) on the computer file to check whether there has been a transfer failure, such as corruption during transfer. Failure of the integrity check may result in the second network entity 110 retransmitting some or all of the computer file. Processing the computer file could comprise performing file verification on the computer file. Such file verification may comprise comparing the computer file with an eXtensible Markup Language (XML) schema. The XML schema may be defined in a standard (or "standardised") format. For example, the XML schema may be an XML Schema Definition (XSD) schema. Another example XML schema is a Document Type Definition (DTD) schema. Such a comparison may be performed using standard tools. Failure of the file verification may result in the second network entity 110 modifying the formatting of the computer files it transfers. A transferred computer file may pass an integrity check, but may fail the verification check and a transferred computer file may pass both the integrity and verification checks but may still not be safely transferred, where safe transfer involves the file being safely stored in multiple locations in the computer network 100. In examples, in which the file transfer acknowledgment is only sent once the computer file has been safely transferred, the file transfer acknowledgment is "overloaded" compared to a conventional file transfer acknowledgment, in that it conveys both that the computer file has been received and that the computer file has been safely transferred. The file transfer acknowledgment may be dependent on the computer file passing the integrity and verification checks, in which case further information would be conveyed to the second network entity 110 on receipt of the file transfer acknowledgment. Processing the computer file could comprise storing all or part of the computer file in a location associated with the first network element 105, for example the storage 120.

At item S2e, the first network entity 105 transmits data relating to the computer file to the third network entity 115.

In this example, the data of item S2e comprises some or all of the computer file. In this example, the first network entity 105 waits until it has fully received the computer file before starting to transfer any of the computer file to the third network entity 115. However, in other examples, the first network entity 105 starts transferring the computer file once it has received some of the computer file but before it fully receives the computer file. The first network entity 105 may transmit a file name of the computer file to the third network entity 115 before transmitting any other part of the computer file to the third network entity 115. In some examples, instead of the first network entity 105 waiting for the third network entity 115 to store the entire computer file before transmitting the file transfer acknowledgment to the second network entity 110, the first network entity 105 transmits the file transfer acknowledgement when the third network entity 115 confirms that it has successfully stored a predetermined part of the computer file, such as the file name.

In response to the third network entity 115 determining that it has not stored the entire transferred computer file (for example, if the first network entity 105 has failed), it can perform one or more predetermined actions, examples of which include, but are not limited to, raising an alarm, issuing an alert and requesting retransmission of some or all of the computer file. Retransmission may be requested using the file name where the third network entity 115 has received the file name. Where the second network entity 110 sends a relatively small number of computer files to the first network entity 105, the third network entity 115 could request direct retransmission of the last-transmitted computer file, all computer files transmitted in the last predetermined time period, etc. The third network entity 115 could instruct the first network entity 105 to request retransmission of some or all of the computer file from the second network entity 110 or otherwise. The second entity 110 may, for example, mark a computer file for deletion once a file transfer acknowledgment is received, but only delete the computer file after the computer file has been marked for deletion for a whole day. As such, there may still be a time period during which a computer file marked for deletion could be recovered. As such, a scenario in which the first network entity 105 fails and the data-loss window arises can be identified and handled.

In some examples, the data of item S2e may indicate that the first network entity 105 is processing the computer file. In such examples, the data of item S2e may not comprise all or part of the computer file itself. The first network entity 105 may set a timer associated with such processing, which is shared with the third network entity 115 and which is configured to pop on expiry of a predetermined time period. The first network entity 105 may cancel the shared timer in response to determining that the computer file has been processed successfully. If the timer pops, the third network entity 115 can determine that the first network entity 105 did not cancel the shared timer and, for example, that the first network entity 105 and/or the processing of the computer file may have failed.

In some examples, the data of item S2e may indicate that the first network entity 105 is in the process of receiving the computer file of item S2c. In such examples, the data of item S2e may not comprise all or part of the computer file itself.

At item S2f, the first network entity 105 receives confirmation data from the third network entity 115, confirming that the third network entity 115 has safely received some or all the data of item S2e. The form of the confirmation data may depend on a communication protocol used by the coupling 145 and could comprise an acknowledgment message in accordance with a given communications protocol.

At item S2g, the first network entity 105 has safely received the entire computer file from the second network entity 105 on the basis that the first network entity 105 (i) has successfully received the computer file (item S2g) and (ii) has received the confirmation data from the third network entity 115 (item S2f).

At item S2h, the first network entity 105 transmits a file transfer acknowledgment to the second network entity 110.

In this example, the first network entity 105 receives the confirmation data of item S2f after the first network entity 105 has successfully received the entire computer file (item S2g). Transmission of the file transfer acknowledgment (item S2h) is therefore delayed with respect to the successful receipt of the computer file (item S2g). In other examples, the first network entity 105 receives the confirmation data before the first network entity 105 has successfully received the entire computer file. For example, the first network entity 105 may start transferring the computer file to the third network entity 115 as soon as the first network entity 105 receives part of the computer file. Upon, for example, receiving the file name of the computer file, the third network entity 115 may send the confirmation data to the first network entity 105, even if one or both of the first and third network entities 105, 115 have not successfully received the entire computer file. Transmission of the file transfer acknowledgment would therefore be delayed in such an example with respect to the receipt of the confirmation data.

The file transfer acknowledgment may indicate receipt of the computer file in accordance with a file transfer protocol. Various file transfer protocols are described above, by way of example only. In more detail, the second network entity 110 may expect to receive a given type of file transfer acknowledgment in accordance with a given file transfer protocol when the first network entity 105 receives a computer file transferred in accordance with the given file transfer protocol. The first and second network entities 105, 110 could use a first type of file transfer acknowledgment to confirm transfer of the computer file as soon as the first network entity 105 successfully receives the computer file and a second, different type of file transfer acknowledgment to confirm that the computer file has been safely transferred. However, the first and second network entities 105, 110 may need to be modified, including potentially having custom, non-standard behaviour in order to understand the second, different type of file transfer acknowledgment. In contrast, in accordance with examples described herein, the first network entity 105 would still send the first type of file transfer acknowledgment but would hold off doing so until the computer file had been safely transferred.

Various measures (for examples methods, network entities and computer programs) are provided which relate to processing a computer file at a first network entity in a computer network. At least part of the computer file is received from a second network entity. Data relating to the received at least part of the computer file is transmitted to a third network entity. Confirmation data is received from the third network entity. The received confirmation data confirms that the third network entity has safely stored the transmitted data. A file transfer acknowledgment is transmitted to the second network entity on the condition that the first network entity has successfully received the computer file and that the first network entity has received the confirmation data.

As such, compared to transmitting the file transfer acknowledgment as soon as the first network entity receives the file on the sole condition that the computer file has been successfully received, the first network entity uses another condition to close, or at least reduce, a failure window that might otherwise occur and could, otherwise, result in undesired and/or irreversible loss of data. In particular, the other condition may be that the third network entity has received and/or stored at least part (in other words some or all) of the received computer file.

Further, since the file transfer acknowledgment not only acknowledges receipt of the computer file, but safe transfer of the computer file, use of a separate mechanism to communicate to the second network entity that the computer file was transferred safely may not be used. Use of the separate mechanism may involve modifications, enhancements, customisation etc to the first and second network entities which may be bypassed in accordance with examples described herein. As such enhanced compatibility, standards-compliance, standard protocol compliance etc may be provided. This is especially effective where deploying such a separate mechanism would involve changes to many network entities.

Further, providing the first network entity with functionality to acknowledge that the computer file has been transferred safely may be relatively efficient compared, for example, to providing such functionality in the second network entity (and potentially any other network entities in the computer network that transfer computer files). Providing such functionality in the second network entity may enable the second network entity to check, for example, that a transferred computer file has been stored redundantly. For example, the second network entity could obtain lists of computer files stored by multiple other network entities and determine that a given computer file has been stored redundantly where the computer file is present in several of the lists. However, this would place a burden and additional work on the second network entity. Further, such an implementation would involve the second network entity being aware of multiple other network entities. In addition, all network entities that transfer computer files would potentially have to be provided with this functionality. In accordance with examples described herein, the second network entity could just be aware of the first network entity and, for example, may not be aware of the third network entity in connection with which the computer file can be redundantly stored.

Further, providing the first network entity with functionality to acknowledge that the computer file has been transferred safely may be relatively efficient compared, for example, to the second network entity transferring the computer file to multiple other network entities itself which would put more work onto the second network entity and would involve the second network entity knowing about multiple other network entities. In addition, all network entities that transfer computer files would potentially have to be provided with this functionality. In accordance with examples described herein, the second network entity could just be aware of the first network entity and, for example, may not be aware of the third entity in connection with which the computer file can be redundantly stored.

Further, providing the first network entity with functionality to acknowledge that the computer file has been transferred safely may be relatively efficient compared, for example, to the first network entity pulling computer files from the second network entity and having logic to check that all computer files are pulled exactly once. If the first network entity were to pull computer files instead, the first network entity would be responsible for cleaning up the computer files on the second network entity. Such cleaning up may comprise deleting computer files and/or marking computer files for deletion. Such a pull-based approach may not be effective where the first network entity is comprised in a pool of network entities that might naively all try to pull the same computer file(s) from the second network entity at the same time. Such a pull-based approach may alternatively or additionally add latency compared to a push-based approach, as the second network entity may know when a computer file has been generated and is ready to be transferred (pushed) to the first network entity, but the first network entity may be unaware of this, so that pulling the computer file from the second network entity might involve the first network entity polling the second network entity.

In some examples, the transmitted data comprises the at least part of the computer file. This can provide a relatively reliable and robust file transfer framework. In particular, the at least part of the computer file may be received at multiple different network entities. For example, the at least part of the computer file may thereby be stored in multiple locations, for example redundantly or otherwise, in the computer network.

In some examples, the at least part of the computer file comprises a file name of the computer file. As such, recovery of the computer file may be enabled even where only part of the computer file is transferred to (and for example also stored by) the third network entity. The first and/or third network entity may be able to use the file name to recover the computer file.

In some examples, the file name is transmitted to the third network entity before at least one other part of the computer file is received by the first network entity. As such, a relatively robust recovery mechanism is provided. By prioritising transfer of the file name, recovery using the file name may be enabled as described above, even where the computer file is not fully transferred.

In some examples, the at least part of the computer file is stored in multiple locations in the computer network including at least locations associated with the first and third network entities. As such, a relatively robust file transfer mechanism may be provided. The at least part of the computer file could, for example, be stored in different geographical locations. One geographical location may be more efficient to access than another, for example.

In some examples, the at least part of the computer file is stored redundantly in the multiple locations in the computer network. As such, a relatively robust file transfer mechanism may be provided. Should the at least part of the computer file be inaccessible at one location (for example as a result of failure or otherwise), the at least part of the computer file may nevertheless still be accessible at another location.

In some examples, the at least part of the computer file is stored in volatile memory in the multiple locations in the computer network. Volatile memory may be more efficient to write to and read from than non-volatile memory. However, volatile memory may be less reliable than non-volatile memory. As such, an efficiency increase may be provided at the expense of reliability in some examples. This is especially effective where the at least part of the computer file is only stored temporarily and is stored in multiple locations (for example redundantly) so that it may still be possible to access the at least part of the computer file even if the at least part of the computer file is lost from one of the volatile memories in which it is stored.

In some examples, the transmitted data comprises the computer file. The computer file corresponds to the entire computer file. This provides a relatively robust and comprehensive file transfer mechanism where the entire computer file can, for example, be backed up.

Some examples comprise receiving a further computer file, combining the successfully received computer file with the received further computer file to generate a combined computer file, causing the combined computer file to be stored in non-volatile memory in at least one location in the computer network. This provides a relatively flexible file transfer mechanism. Computer files can be stored temporarily in efficiently in volatile memory until they are combined, at which point the combing computer file can be stored more reliably in non-volatile memory.

In some examples, the transmitted data indicates that the first network entity is processing the at least part of the computer file. As such, the third network entity may be made aware of the at least part of the computer file. If, for example, the first network entity failed before the first network entity had processed the entire computer file, the third network entity may be useable to request retransmission of the computer file from the second network entity. If the third network entity was not made aware that the first network entity was processing the at least part of the computer file, the third network entity may not have been able to request retransmission of the computer file from the second network entity in such a scenario.

In some examples, the transmitted data indicates that the first network entity is in the process of receiving the at least part of the computer file. As such, the third network entity may be made aware of the at least part of the computer file. If, for example, the first network entity failed before the first network entity had received the entire computer file, the third network entity may be useable to request retransmission of the computer file from the second network entity. If the third network entity was not made aware that the first network entity was receiving the at least part of the computer file, the third network entity may not have been able to request retransmission of the computer file from the second network entity in such a scenario.

Some examples comprise setting a timer associated with processing of the received at least part of the computer file. The timer is shared with the third network entity and is configured to pop on expiry of a predetermined time period. The shared timer is cancelled in response to determining that the received at least part of the computer file has been processed successfully. As such, a coordination and failure mechanism may be provided to enable the third network entity to determine reliably when a failure occurs in relation to the first network entity.

In some examples, the processing is performed at an application layer. Even where data is successfully received at a lower level, a mechanism is provided at a higher level to make sure a computer file is safely transferred before a file transfer acknowledgment is sent. Such a mechanism may supplement any lower-level acknowledgment mechanism that may be provided.

In some examples, the confirmation data is received after the computer file is successfully received by the first network entity, whereby the transmitting of the file transfer acknowledgment is delayed with respect to the successful receipt of the computer file. As such, a file transfer acknowledgment mechanism may be provided that does not involve modification of the second network entity. The mechanism may be, in effect, transparent to the second network entity in that the second network entity may be unaware that the first network entity has (intentionally) delayed transmission of the file transfer acknowledgment.

In some examples, communication between the first and second network entities is in accordance with a file transfer protocol and the file transfer acknowledgment indicates successful receipt of the computer file in accordance with the protocol. As such, reliable and compatible file transfer may be provided. Further, a relatively efficient acknowledgment mechanism, where the second network entity may not need to await multiple different file transfer acknowledgments to determine that a computer file has been safely transferred.

In some examples, the file transfer protocol comprises File Transfer Protocol (FTP), Secure File Transfer Protocol (SFTP), File Transfer Protocol Secure (FTPS), and/or Secure Copy Protocol (SCP). As such, well-defined computer file transfer may be provided at the application layer.

Some examples comprise performing file verification on the received at least part of the computer file. The transmitting of the file transfer acknowledgment to the second network entity is further on the condition that the file verification is successful. As such, the first network entity may determine, for example, that the received computer file is suitable for storage in the computer network. Without the file verification being performed, a computer file that is not corrupted but is not in a preferred format for storage may be stored in the computer network.

In some examples, the performing of the file verification comprises comparing the received at least part of the computer file with an eXtensible Markup Language (XML) document. As such, a specific mechanism for performing the file verification may be provided. The schema may be particularly, but not exclusively, applicable in relation to a CCF processing an XML-format CDR, as described above.

In some examples, the XML document is defined by an XML Schema Definition, XSD, schema. As such, a particular XML document may be compared against this XSD schema to confirm it is accurate and meets best practices.

In some examples, the first and third network entities comprise Charging Collection Functions, CCFs, and wherein the second network entity comprises a Charging Trigger Function, CTF. As such, the techniques and mechanisms described herein may conveniently be used in the context of processing network usage reports.

Various measures (for examples methods, network entities and computer programs) are provided which relate to processing a computer file in a computer network. The computer file is received. Acknowledging receipt of the computer file is delayed until at least part of the computer file has been stored redundantly in the computer network. As such, the sending network entity can be assured that the receiving network entity has safely received and redundantly stored the computer file before, for example, marking the computer file for deletion.

Various measures (for examples methods, network entities and computer programs) are provided which relate to processing a computer file in a computer network. The computer file is received at the application layer. Transmitting, at the application layer, of a file transfer acknowledgment associated with successful receipt of the computer file is delayed until at least part of the computer file has been stored in multiple non-volatile memories in the computer network. As such, a high-level mechanism may be provided to make sure a computer file is safely received before successful receipt of the computer file is acknowledged.

Various measures (for examples methods, network entities and computer programs) are provided which relate to processing a computer file in a computer network. A network entity in the computer network receives data relating to at least part of the computer file. The at least part of the computer file has been received by at least one other network entity in the computer network. The network entity transmits confirmation data to the at least one other network entity to enable the at least one other network entity to transmit a file transfer acknowledgment message indicating that the computer file has been successfully received. The transmitted confirmation data confirms that the network entity has received the data relating to at least part of the computer file. The network entity uses the received the data relating to the at least part of the computer file to recover the computer file in the event of failure of the at least one other network entity. As such, a failure mechanism may be provided so that the at least one further network entity can confirm that the file has been safely transferred. The network entity can recover the computer file if the at least one other network entity fails.

The above embodiments are to be understood as illustrative examples. Further embodiments are envisaged.

Examples are described above in which the first and third network entities are of the same or similar type, for example both being CCFs. Other examples are envisaged in which the first and third network entities are of different types. For example, the first network entity could be a CCF and the third network entity could be a subscriber charge generation system (or "billing system"), etc.

Examples are described above in which the file transfer acknowledgment is transmitted on the conditions that the first network entity (i) has successfully received the computer file and (ii) has received the confirmation data from the third network entity. Other examples are envisaged in which, more generally, the file transfer acknowledgment is transmitted on the conditions that the first network entity (i) has successfully received the computer file and (ii) determines that the third entity has received the transmitted data relating to the computer file. For example, the first network entity may determine that the third entity has received such transmitted data where the first network entity identifies that the third network entity is functioning correctly and unless the first network entity receives data from the third network entity indicating that the third network entity has not received such transmitted data.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

The following numbered clauses on pages 19 to 22 of the present description correspond to the claims of UK patent application no. 1915241.2, from which the present application claims priority, as filed. The claims of the present application as filed can be found on the subsequent pages 23 to 25 of the specification which begin with the heading "Claims".
1. A method of processing a computer file at a first network entity in a computer network, the method comprising:
   receiving at least part of the computer file from a second network entity;
   transmitting data relating to the received at least part of the computer file to a third network entity;
   receiving confirmation data from the third network entity, the received confirmation data confirming that the third network entity has received the transmitted data; and
   transmitting a file transfer acknowledgment to the second network entity on the conditions that the first network entity (i) has successfully received the computer file and (ii) has received the confirmation data.
2. A method according to clause 1, wherein the transmitted data comprises some or all of the at least part of the computer file.
3. A method according to clause 1 or 2, wherein the transmitted data comprises a file name of the computer file.
4. A method according to clause 3, wherein the file name is transmitted to the third network entity before at least one other part of the computer file is received by the first network entity.
5. A method according to any of clauses 1 to 4, wherein the at least part of the computer file is stored in multiple locations in the computer network including at least locations associated with the first and third network entities.
6. A method according to any of clauses 1 to 5, wherein the transmitted data comprises the computer file.
7. A method according to any of clauses 1 to 6, wherein the transmitted data indicates that the first network entity is processing the at least part of the computer file.
8. A method according to any of clauses 1 to 7, wherein the transmitted data indicates that the first network entity is in the process of receiving the computer file.
9. A method according to any of clauses 1 to 8, wherein the received confirmation data confirms that the third network entity has safely stored the transmitted data.
10. A method according to any of clauses 1 to 9, comprising:
   setting a timer associated with processing of the received at least part of the computer file, wherein the timer is shared with the third network entity and is configured to pop on expiry of a predetermined time period; and
   cancelling the shared timer in response to determining that the received at least part of the computer file has been processed successfully.
11. A method according to any of clauses 1 to 10, wherein the method is performed at an application layer.
12. A method according to any of clauses 1 to 11, wherein the confirmation data is received after the computer file is successfully received by the first network entity, whereby the transmitting of the file transfer acknowledgment is delayed with respect to the successful receipt of the computer file.
13. A method according to any of clauses 1 to 12, wherein communication between the first and second network entities is in accordance with a file transfer protocol and wherein the file transfer acknowledgment indicates successful receipt of the computer file in accordance with the file transfer protocol.
14. A method according to clause 13, wherein the file transfer protocol comprises:
   File Transfer Protocol, FTP;
   Secure File Transfer Protocol, SFTP;
   File Transfer Protocol Secure, FTPS; and/or
   Secure Copy Protocol, SCP.
15. A method according to any of clauses 1 to 14, comprising performing file verification on the received at least part of the computer file, wherein the transmitting of the file transfer acknowledgment to the second network entity is further on the condition that the file verification is successful.
16. A method according to clause 15, wherein the performing of the file verification comprises comparing the received at least part of the computer file with an eXtensible Markup Language, XML, schema.
17. A method according to clause 16, wherein the XML schema is in the form of an XML Schema Definition, XSD, schema.
18. A method according to any of clauses 1 to 17, wherein the first and third network entities comprise Charging Collection Functions, CCFs, and wherein the second network entity comprises a Charging Trigger Function, CTF.
19. A method of processing a computer file in a computer network, the method comprising:
   receiving the computer file; and
   delaying acknowledging receipt of the computer file until at least part of the computer file has been stored redundantly in the computer network.
20. A method of processing a computer file in a computer network, the method comprising:
   receiving, at an application layer, the computer file; and
   delaying, at the application layer, transmitting a file transfer acknowledgment associated with successful receipt of the computer file until at least part of the computer file has been stored in multiple storage locations in the computer network.
21. A method according to clause 21, wherein the multiple storage locations comprise volatile memory.
22. A method of processing a computer file in a computer network, the method comprising, at a network entity in the computer network:
   receiving data relating to at least part of the computer file, the at least part of the computer file having been received by at least one other network entity in the computer network;
   transmitting confirmation data to the at least one other network entity to enable the at least one other network entity to transmit a file transfer acknowledgment message indicating that the computer file has been successfully received, the transmitted confirmation data confirming that the network entity has received the data relating to the at least part of the computer file; and
   using the received data relating to the at least part of the computer file to recover the computer file in the event of failure of the at least one other network entity.
23. A method according to clause 22, wherein receiving the computer file comprises:
   raising an alarm;
   issuing an alert; and/or
   requesting retransmission of some or all of the computer file.
24. A network entity configured to perform a method according to any of clauses 1 to 23.
25. A computer program adapted to perform a method according to any of clauses 1 to 23.

## Claims

1. A method of processing a computer file at a first network entity (105) in a computer network (100), the method comprising:
receiving (S2c) at least part of the computer file from a second network entity (110);
transmitting (S2e) data relating to the received at least part of the computer file to a third network entity (115), wherein the transmitted data:
(i) comprises a file name of the computer file, and wherein the file name is transmitted to the third network entity before at least one other part of the computer file is received by the first network entity; and/or
(ii) indicates that the first network entity is processing the at least part of the computer file; and/or
(iii) indicates that the first network entity is in the process of receiving the computer file;
receiving (S2f) confirmation data from the third network entity, the received confirmation data confirming that the third network entity has received the transmitted data; and
transmitting (S2h) a file transfer acknowledgment to the second network entity on the conditions that the first network entity (i) has successfully received the computer file and (ii) has received the confirmation data.

2. A method according to claim 1, wherein the transmitted data comprises some or all of the at least part of the computer file.

3. A method according to claim 1 or 2, wherein the at least part of the computer file is stored in multiple locations in the computer network including at least locations associated with the first and third network entities.

4. A method according to any of claims 1 to 3, wherein the transmitted data comprises the computer file.

5. A method according to any of claims 1 to 4, wherein the received confirmation data confirms that the third network entity has safely stored the transmitted data.

6. A method according to any of claims 1 to 5, comprising:
setting a timer associated with processing of the received at least part of the computer file, wherein the timer is shared with the third network entity and is configured to pop on expiry of a predetermined time period; and
cancelling the shared timer in response to determining that the received at least part of the computer file has been processed successfully.

7. A method according to any of claims 1 to 6, wherein the method is performed at an application layer.

8. A method according to any of claims 1 to 7, wherein the confirmation data is received after the computer file is successfully received by the first network entity, whereby the transmitting of the file transfer acknowledgment is delayed with respect to the successful receipt of the computer file.

9. A method according to any of claims 1 to 8, wherein communication between the first and second network entities is in accordance with a file transfer protocol and wherein the file transfer acknowledgment indicates successful receipt of the computer file in accordance with the file transfer protocol.

10. A method according to claim 9, wherein the file transfer protocol comprises:
File Transfer Protocol, FTP;
Secure File Transfer Protocol, SFTP;
File Transfer Protocol Secure, FTPS; or
Secure Copy Protocol, SCP.

11. A method according to any of claims 1 to 10, comprising performing file verification on the received at least part of the computer file, wherein the transmitting of the file transfer acknowledgment to the second network entity is further on the condition that the file verification is successful.

12. A method according to claim 11, wherein the performing of the file verification comprises comparing the received at least part of the computer file with an eXtensible Markup Language, XML, schema, optionally wherein the XML schema is in the form of an XML Schema Definition, XSD, schema.

13. A method according to any of claims 1 to 12, wherein the first and third network entities comprise Charging Collection Functions, CCFs, and wherein the second network entity comprises a Charging Trigger Function, CTF.

14. A network entity (105) configured to perform a method according to any of claims 1 to 13.

15. A computer program adapted to perform a method according to any of claims 1 to 13.
